# EUROPEAN PATENT APPLICATION

(11) **EP 2 898 764 A1**
(43) Date of publication of application: **29.07.2015**
(21) Application number: 14194284.7
(22) Date of filing: 21.11.2014
(51) Int. Cl.: A01F 15/07

(54) **ROLL BALER**

(30) Priority: 27.01.2014 JP 2014012869
(71) Applicant: Takakita Co., Ltd., Nabari-City Mie 518-0441 (JP)
(72) Inventor: Tuji, Morio, Nabari-City, Mie 518-0441 (JP)
(74) Representative: Müller Hoffmann & Partner

(57) **Abstract**

In a roll baler (1), a roll shaping section (5) includes an endless transport unit (3) and a plurality of rollers (4). The endless transport unit (3) is provided to extend to a rear position beyond a lower end portion (B) of the roll forming section (5) below a rotation center (C). The plurality of rollers (4) are arranged in an arc form from a rear side of the endless transport unit (3). A crop transported to a rear end of the endless transport unit (3) is pressed against the rollers (4), is pushed up by rotation of the rollers (4), and is rotated by its own weight and rotation of the rollers (4) to form a small roll (71) in an initial state. Then, the roll (71) is increased in size by crops transported sequentially.

## Description

### BACKGROUND OF THE INVENTION

### 1. Field of the Invention

The present invention relates to a roll baler that shapes a cylindrical roll bale by picking up a crop, such as hay and straw, from the field, and more specifically, to a roll baler that avoids noise in a roll shaping section and reliably shapes a roll bale.

### 2. Description of the Related Art

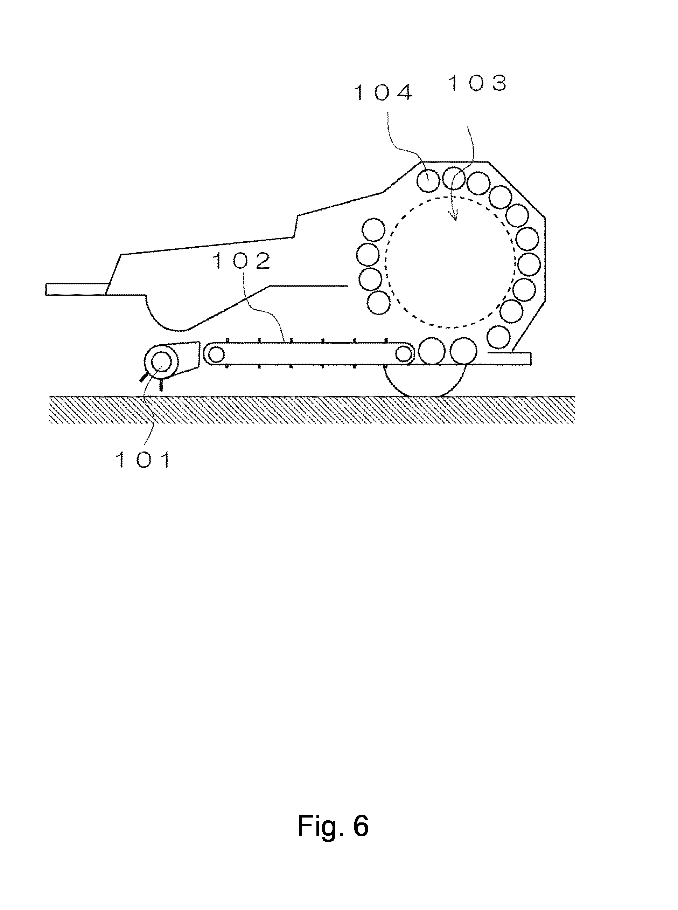

The configuration of a typical roll baler of the related art will be described with reference to Fig. 6.

Referring to Fig. 6, a pickup section 101 picks up a crop from the field. The pickup section 101 picks up the crop while rotating a cylindrical rotating member that is provided at a position near the ground and has tines on its outer periphery. A transport section 102 transports the crop picked up by the pickup section 101 to a roll shaping section 103. The transport section 102 is formed by, for example, an endless transport unit such as a belt. The roll shaping section 103 shapes a cylindrical roll bale while rotating the crop transported by the transport section 102. When a roll bale is shaped by such a roll baler, a crop is picked up by the pickup section 101, and is transported by the transport section 102 to the roll shaping section 103, where the crop is shaped into a roll bale. After that, for example, a net or string is wound around the roll bale.

As the structure of the roll shaping section in such a roll baler, for example, there are a tight bar structure in which a roll bale is shaped while moving tight bars in an arc form (for example, Japanese Unexamined Patent Application Publication No. 2008-142049), and a roller structure in which a roll bale is shaped while rotating a plurality of rollers 104 arranged in an arc form, as illustrated in Fig. 6 (for example, Japanese Unexamined Patent Application Publication No. 2001-008525).

In the above-described tight bar structure, a crop can be forcibly transported while being placed on the tight bars. Hence, after a roll in an initial state is formed by transporting the crop to a rear raised part of the roll shaping section such that the crop rotates, it can be gradually increased in size to shape a roll bale. However, this tight bar structure causes loud noise because tight chains to which the tight bars are attached slide along an arc-shaped guide.

In contrast, the roller structure does not cause such noise because the rollers rotate. However, in the roller structure, the crop and the rollers have little contact with each other, and the rollers themselves do not move, unlike the tight bars. Hence, for example, when the crop contains much moisture, it slips on the roller provided at the entrance of the roll shaping section, where the crop is collected into a mass and do not move forward. This sometimes makes it difficult to form a spiral roll bale.

### SUMMARY OF THE INVENTION

Accordingly, it is an object of the present invention to provide a roll baler that can suppress the occurrence of noise in a roll shaping section and that can shape a roll bale by reliably transporting a crop picked up by a pickup section to the roll shaping section.

To overcome the above problems, a roll baler according to an aspect of the present invention includes a pickup section that picks up a crop from a field, and a roll shaping section that shapes a roll bale from the picked crop. The roll shaping section includes an endless transport unit and a plurality of rollers. The endless transport unit extends to a rear position beyond a lower end portion of the roll shaping section below a rotation center. The plurality of rollers are arranged in an arc form from a rear side of the endless transport unit.

According to this configuration, since the endless transport unit extends to the rear position beyond the lower end portion of the roll shaping section below the rotation center, a small roll in an initial state can be reliably formed by the endless transport unit or the rollers in a raised part on the rear side of the endless transport unit. The small roll can be gradually increased in size to shape a roll bale. Moreover, since the inside of the roll shaping section is formed by the rollers, noise can be reduced considerably.

Preferably, the endless transport unit is integrally provided from the pickup section to the rear position beyond the lower end portion of the roll shaping section.

According to this structure, one endless transport unit can form the part from the pickup section to the position beyond the lower end portion of the roll shaping section in the related art. This can shorten the total length of the roll baler.

Preferably, the endless transport unit and the plurality of rollers are provided on an inner side of an opening and closing door.

According to this structure, when the opening and closing door is opened, the rollers and the endless transport unit are visible from the inner side. This allows easy maintenance.

According to the present invention, in the roll baler including the pickup section for picking up a crop from the field and the roll shaping section for shaping a roll bale from the picked crop, the roll shaping section includes the endless transport unit and the plural rollers. The endless transport unit extends to the rear position beyond the lower end portion of the roll shaping section below the rotation center, and the plural rollers are arranged in an arc form from the rear side of the endless transport unit. Therefore, a small roll in an initial state can be reliably formed by the rollers in the raised part on the rear side of the endless transport unit, and the small roll can be gradually increased in size to shape a roll bale. Moreover, since the inside of the roll shaping section is formed by the rollers, noise can be reduced considerably.

### BRIEF DESCRIPTION OF THE DRAWINGS

Fig. 1 is a schematic view of a roll baler according to an embodiment of the present invention;
Fig. 2 illustrates a boundary portion between an endless transport unit and a roller near a lower end portion of a roll shaping section in the embodiment;
Fig. 3 illustrates a power mechanism for the endless transport unit and rollers, and a shaped state of a roll bale in the embodiment;
Fig. 4 illustrates the power mechanism for the endless transport unit and the rollers in the embodiment;

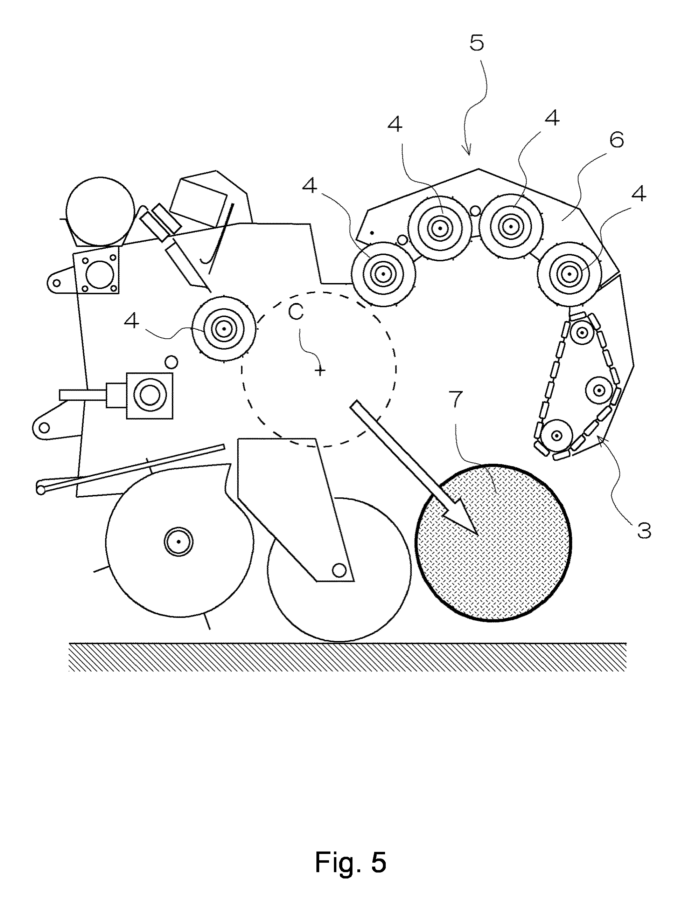

Fig. 5 illustrates a state in which an opening and closing door of the roll baler in the embodiment is open; and
Fig. 6 illustrates a roll baler of the related art.

### DESCRIPTION OF THE PREFERRED EMBODIMENTS

An embodiment of the present invention will be described below with reference to the drawings.

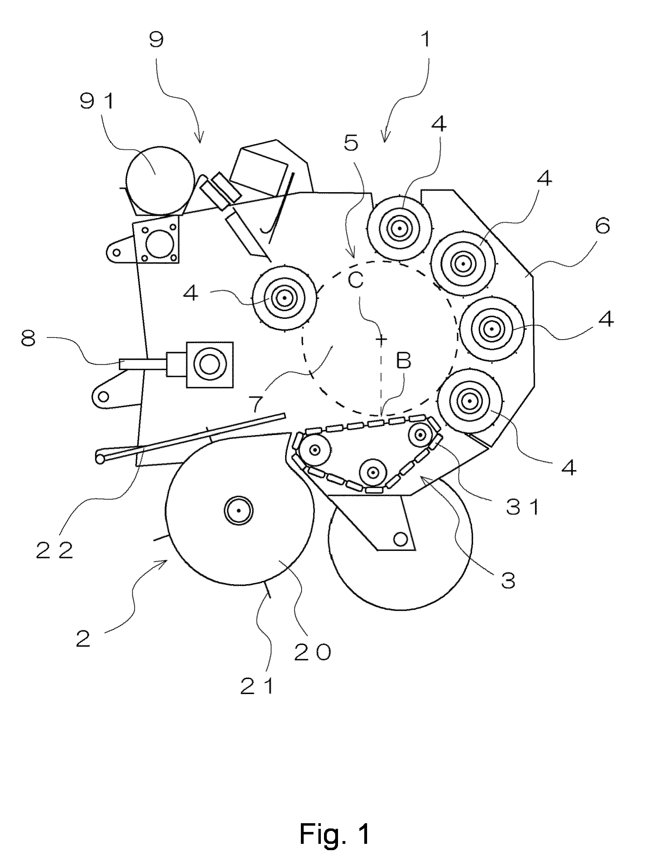

A roll baler 1 according to the embodiment can shape a cylindrical roll bale 7 while picking up a crop such as hay and straw, from the field. As illustrated in Fig. 1, the roll baler 1 includes a pickup section 2 that picks up a crop from the field, and an endless transport unit 3 that transports the crop picked up by the pickup section 2 to a roll shaping section 5. A roll bale 7 is shaped in the roll shaping section 5, is wound with string or a net (hereinafter referred to as "wrapping member 91") in a binding mechanism 9, and is then discharged to the field. Characteristically, the roll shaping section 5 is composed of the endless transport unit 3 and a plurality of rollers 4 to reduce noise. Further, the endless transport unit 3 is provided to extend to a rear position beyond a lower end portion B of the roll forming section 5 below a rotation center C, and the rollers 4 are arranged in an arc form from a raised position on the rear side of the endless transport unit 3 to reliably shape a roll bale 7. The roll baler 1 according to the embodiment will be described below.

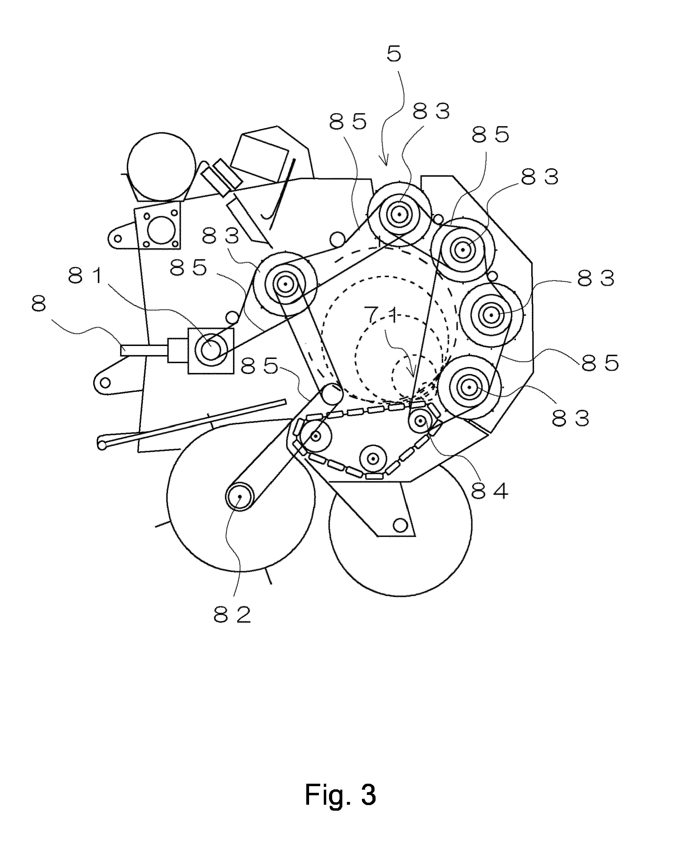

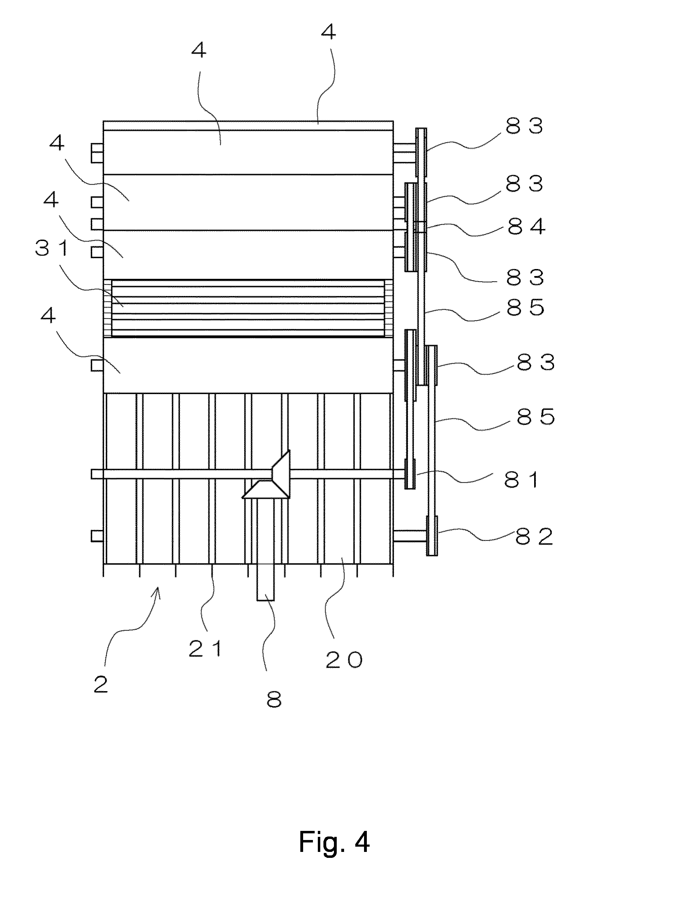

First, the pickup section 2 of the roll baler 1 picks up a crop from the field, and is provided with a plurality of tines 21 standing on a surface of a rotating body 20. By rotating the tines 21, the crop is picked up from the field. In the pickup section 2, the crop is picked up by rotating the tines 21 in a running direction such as to scratch the surface of the ground. The crop is transferred to the endless transport unit 3 while being pressed by a press bar 22 provided on the upper side of the rotating body 20. As illustrated in Figs. 3 and 4, the pickup section 2 is driven by rotating force from a PTO 8 of a tractor provided ahead thereof. The rotating force from the PTO 8 is converted into rotating force in the right-left direction via a bevel gear, and a sprocket 82 of the pickup section 2 is rotated using a driving sprocket 81 provided on a shaft of rotation in the right-left direction and chains 85 laid in order from the driving sprocket 81.

In contrast, the endless transport unit 3 has the function of transporting the crop picked up by the pickup section 2 to the inside of the roll shaping section 5 and the function of shaping a roll in the roll shaping section 5. Herein, the endless transport unit 3 has a structure in which tight bars 31 circle. Tight chains are provided at both right and left ends of the tight bars 31. The tight bars 31 are circled in an endless manner by winding the tight chains on front and rear sprockets 84 (Fig. 3) in order to reduce noise. While a tight bar endless transport unit is given as an example of the endless transport unit 3 herein, a belt endless transport unit may be used. In such a belt endless transport unit, gaps are not provided between the tight bars 31, unlike the tight bar endless transport unit. Hence, a crop does not fall from the gaps during transportation. However, manufacturing cost is high, and assemblability, maintainability, and durability are low. In contrast, the tight bar endless transport unit achieves lower cost and higher assemblability, maintainability, and durability than the belt endless transport unit. For this reason, the tight bar endless transport unit 3 is adopted herein.

The roll shaping section 5 shapes a cylindrical roll bale 7 from the transported crop, and is composed of the above-described endless transport unit 3 and a plurality of rollers 4.

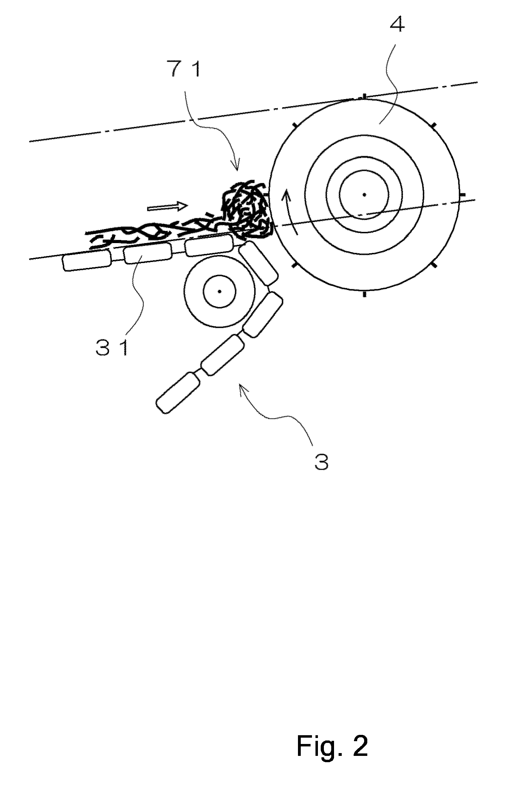

The principle of shaping of a roll bale 7 will now be described with reference to Fig. 2 and so on.

To shape a roll bale 7 from a picked crop, first, it is necessary to transport the crop to the rollers 4 at a raised position on the rear side of the roll shaping section 5 such that the crop rotates. If the crop transported from the endless transport unit 3 is transferred to an upper surface of a roller that is flush with the endless transport unit 3, it may slip to form a mass on the roller at the transfer position. In this case, the crop cannot rotate. Accordingly, in this embodiment, to prevent the occurrence of such mass, the endless transport unit 3 is provided to extend to a portion on the rear side of the lower end portion B below the rotation center C of the roll shaping section 5 that forms a circular space (rotation center C of a completed roll bale 7), and the rollers 4 are arranged in an arc form from the rear raised portion of the endless transport unit 3 to shape the roll bale 7. At this time, as illustrated in Fig. 2, the endless transport unit 3 extends rearward to be inclined toward an obliquely upper side, and the rollers 4 are arranged such that the crop transported from the endless transport unit 3 comes into contact with side surfaces of the rollers 4. By such arrangement, an obliquely upward inertial force is applied to the crop transported from the endless transport unit 3 to press the crop against the side surfaces of the rollers 4. The crop is rotated by upward elevating force of the rollers 4 and the fall due to its own weight. A small roll 71 in an initial state is shaped by this rotation (a state of Fig. 2), and a large spiral roll bale 7 is shaped from crops transported sequentially.

The rollers 4 and the endless transport unit 3 are driven integrally with the pickup section 2. That is, when the pickup section 2 is driven, the rollers 4 and the endless transport unit 3 can be driven simultaneously. Conversely, when driving of the pickup section 2 is stopped, driving of the rollers 4 and the endless transport unit 3 is stopped simultaneously. Specifically, as illustrated in Figs. 3 and 4, a chain 85 is laid between the driving sprocket 81 to be driven by the PTO 8 of the tractor and a sprocket 83 of the first roller 4, and chains 85 are laid between sprockets 83 of the other rollers 4 in order. A chain 85 is also laid between a sprocket 83 of the last roller 4 and the sprocket 84 for driving the tight chains. This structure allows the rollers 4 and the endless transport unit 3 to be driven integrally with the pickup section 2.

The endless transport unit 3 and the plural rollers 4 are mounted on an inner side of an opening and closing door 6 that opens and closes toward the rear side, and turn rearward integrally with the opening and closing door 6 when the opening and closing door 6 is opened. The opening and closing door 6 is opened and closed by being pivoted about a pivot shaft by an unillustrated hydraulic cylinder provided on the upper side. Since the endless transport unit 3 and the rollers 4 are thus mounted on the inner side of the opening and closing door 6, they are visible from the inner side when the opening and closing door 6 is opened. This allows maintenance to be performed from the inner side.

The binding mechanism 9 winds a wrapping member 91 (see Fig. 1) around the outer periphery of a roll bale 7 shaped by the roll shaping section 5. When the size of the roll bale 7 reaches a predetermined size, the wrapping member 91 is paid out and is wound around the entire roll bale 7 while rotating the roll bale 7. In such a binding mechanism 9, as described in, for example, Japanese Unexamined Patent Application Publication No. 6-105615, when the size of the roll bale 7 reaches a predetermined size, an unillustrated twine motor can be rotated to pay out twine toward the roll shaping section 5 by using frictional force caused by contact between a twine starter roller and a twine tension roller. After winding around the roll bale 7 is completed, the wrapping member 91, such as twine, is cut, and the opening and closing door 6 on the rear side of the roll shaping section 5 is opened to discharge the roll bale 7 to the field.

Next, the operation of the roll baler 1 having the above-described configuration will be described.

First, to shape a roll bale 7 from a crop, such as hay or straw, in the field, the tractor is driven, and the pickup section 2, the endless transport unit 3, and the rollers 4 are rotated by rotation of the PTO 8.

Then, a crop is picked up from the field by the tines 21 in the pickup section 2 while running the tractor in that state, and is placed on the endless transport unit 3 while being pressed by the press bar 22.

The crop placed on the endless transport unit 3 is transported rearward in order while being placed on the tight bars 31, and are further transported to the raised portion on the rear side of the lower end portion B of the roll forming section 5 below the rotation center C.

At this time, as illustrated in Fig. 2, the crop transported to the rear end of the endless transport unit 3 is pressed against the side surface of the roller 4 by the endless transport unit 3, and is pushed upward by rotation of the roller 4, where the crop rotates owing to its own weight. Thus, a small roll 71 in an initial state can be formed.

Subsequently, the roll 71 is gradually increased in size while winding crops sequentially transported around the outer periphery of the roll 71 (see Figs. 2 and 3) to shape a large roll bale 7. When the size of the roll bale 7 reaches the predetermined size, the wrapping member 91 is wound around the outer periphery of the roll bale 7 by using the binding mechanism 9.

Then, the rear opening and closing door 6 is opened, and the bound roll bale 7 is discharged to the field.

In this way, according to the above-described embodiment, in the roll baler 1 including the pickup section 2 for picking up a crop from the field and the roll shaping section 5 for shaping a roll bale 7 from the picked crop, the roll shaping section 5 is composed of the endless transport unit 3 and the rollers 4, and the endless transport unit 3 is provided to extend to the rear position beyond the lower end portion B of the roll forming section 5 below the rotation center C. Further, the plural rollers 4 are arranged in an arc form from the rear side of the endless transport unit 3. Hence, a small roll 71 in the initial state can be reliably formed by the rollers 4 in the raised part on the rear side of the endless transport unit 3, and can be gradually increased in size to shape a roll bale 7. Moreover, since the inner side of the roll shaping section 5 is formed by the rollers 4, noise can be reduced considerably.

Since the endless transport unit 3 is integrally provided to extend from the pickup section 2 to the rear position beyond the lower end portion of the roll shaping section 5, the total length of the roll baler 1 can be shortened.

Further, since the endless transport unit 3 and the rollers 4 are provided on the inner side of the opening and closing door 6, they are visible from the inner side when the opening and closing door 6 is opened. This allows easy maintenance.

The present invention is not limited to the above-described embodiment, and can be carried out by various embodiments.

For example, while the endless transport unit 3 and the rollers 4 are disposed on the inner side of the opening and closing door 6 in the above embodiment, only the rollers 4 may be disposed on the inner side of the opening and closing door 6. In this case, the roll bale 7 is supported by the endless transport unit 3 at the lower end portion B below the rotation center C. Hence, the roll bale 7 cannot be discharged to the field as it is. For this reason, preferably, the roll baler 1 is tilted rearward, or means for pressing the roll bale 7 is provided to extend rearward from the inner side of the roll shaping section 5.

While one endless transport unit 3 is provided in the above embodiment, a plurality of endless transport units 3 may be provided successively.

While the roll baler 1 is towed by the tractor in the above embodiment, the above-described configuration may be applied to a self-travelling roll baler.

While the pickup section 2, the endless transport unit 3, and the rollers 4 are integrally driven in the above embodiment, only the pickup section 2 may be driven independently.

While the pickup section 2 has the structure in which the standing tines 21 are rotated in the above embodiment, it may adopt any structure that can pick up a crop from the field.

While the binding mechanism 9 is provided in the above embodiment, it may be omitted, or a different binding mechanism may be used.

## Claims

1. A roll baler (1) comprising:
a pickup section (2) that picks up a crop from a field; and
a roll shaping section (5) that shapes a roll bale (7) from the picked crop,
wherein the roll shaping section (5) includes an endless transport unit (3) and a plurality of rollers (4),
wherein the endless transport unit extends to a rear position beyond a lower end portion (B) of the roll forming section (5) below a rotation center (C), and
wherein the plurality of rollers (4) are arranged in an arc form from a rear side of the endless transport unit (3).

2. The roll baler (1) according to Claim 1, wherein the endless transport unit (3) is integrally provided from the pickup section (2) to the rear position beyond the lower end portion (B) of the roll shaping section (5).

3. The roll baler (1) according to Claim 1, wherein the endless transport unit (3) and the plurality of rollers (4) are provided on an inner side of an opening and closing door (6) to be opened and closed integrally.
